# EUROPEAN PATENT SPECIFICATION

(11) **EP 2 055 753 B1**
(45) Date of publication and mention of the grant of the patent: **06.01.2010**
(21) Application number: 07119897.2
(22) Date of filing: 02.11.2007
(51) Int. Cl.: C09J 5/00, C09J 201/10

(54) **Method of joining wood elements using a moisture sealant adhesive**
Verfahren zum Fügen von Holzelementen unter Verwendung eines feuchtigkeitsabdichtenden Klebstoffs
Méthode de collage de pièces en bois au moyen d'un adhésif étanche aux moisissures

(43) Date of publication of application: 06.05.2009
(73) Proprietor: Drywood Coatings B.V., 7547 SK Enschede (NL)
(72) Inventor: De Meijer, Mari, 6821 LZ Arnhem (NL); Nienhuis, Johan, 6701 BW Wageningen (NL)
(74) Representative: Hatzmann, Martin

(56) References cited:
- EP-A- 1 384 766
- EP-A- 1 873 220
- WO-A-00/37534
- DE-A1- 19 724 835
- US-A1- 2003 153 671

## Description

### Field of the Invention

The invention pertains to the sealant joining, and particularly the adhesive bonding, of elements, both load bearing structural elements and, particularly non-load bearing elements, made from wood (hereinafter indicated as "wood joints"). The invention also relates to compositions for use as an adhesive for wood joints. Particularly, the invention pertains to the prevention and avoidance of the effects of moisture on wood joints.

### Background of the Invention

Wood joints, such as joints in wooden constructions, contain many end grain surfaces. Depending on the wood species, water uptake is 5 to 10 times faster through the end-grain compared to other surfaces. This results in a wood moisture content higher in and around the joints compared to other parts. A higher wood moisture content may cause (early) wood decay, extreme swelling (resulting in jamming windows and doors) and introduces stress in the joint. This may result in open joints which capillary effect enables even higher water uptakes. Another factor that introduces stress in joints, is the drying of wood due to sun irradiance causing shrinkage of the timber. The higher fluctuations in wood moisture content around joints causes early failure of coatings such as cracking or flaking, leading to even higher ingress of moisture. In fact, moisture existing or occurring at or around wood joints, may have a larger contribution to the moisture content in a construction than can be prevented by coating the other parts of the construction.

References in respect of the above problems relate e.g. to constructional solutions, which serve to dampen the constructional effects, such as cracking, that result from swelling and shrinking, such as techniques to build in spacers between the various interconnected parts of wood joints. See e.g. NL C 1023100, NL A 9400017 and NL 94 A 9401794. These patent publications describe the application of a spacer between the parts of the joint, being either a polymeric plate or an arrangement of small polymeric balls in combination with the use of a two component impregnation adhesive based on epoxy. NL C 1023100 also includes the use of an flexible sealant at the outer parts of the joint. These techniques do not fundamentally tackle the occurrence of moisture.

Neither do existing products to connect wood joints address the aforementioned issues related to moisture. With reference to Charles. B. Vick, Adhesive Bonding of Wood Materials, [Forest Products Laboratory Wood handbook, 1999] it is noted that moisture plays a role in making adhesive bonds in the case of moisture-curable adhesives. Issues addressed relate to moisture control upon applying and curing the adhesive, the importance of moisture control residing in the quality of the adhesive joint obtained.

US 4,897,291 describes a sealant composition to seal wood products against moisture absorption. The composition comprises a water-based polymeric binder, a wax hydrophobic filler and a water-soluble alkali metal siliconate salt. The composition is applied in the form of a coating, particularly on end faces of lumber and on the edges of wood products. The described sealant composition is not an adhesive and is not gap-filling. The document does not address the problem of moisture around joints

Further background references relate to the use of moisture-curable adhesives on a wide variety of materials. See e.g. US 2003/0153671 that relates to, e.g- a moisture curable adhesive comprising a copolymer including a reactive silicon group. Further, WO 00/37534 relates to a one-component, moisture-curable adhesive composition for securing insulation to a roof-deck.

The adhesive comprises a silylated polymer and an extender. DE 197 24 835 relates to the use of silane-grafted amorphous poly-α-olefins as a moisture-crosslinkable adhesive.

### Summary of the Invention

It would be advantageous if wood joints could be produced that are better protected from the influences of moisture. It were particularly advantageous if such could be realized in such a way as to provide moisture protection, rather than dampening of the dimensional effects of moisture. Moreover, it were advantageous if an adhesive for wood joints could be provided that enables the thus obtained joints to have an at least similar protection from moisture as will other (non-joint) parts have from coating.

To better address the foregoing desires, the invention, in one aspect, is a method of joining two or more elements made from wood, the method comprising bringing into contact at least one surface portion of either element so as to define a contact interface between the elements, wherein a moisture sealant silyl composition, capable of crosslinking in the presence of moisture, is applied at the interface, wherein the composition comprises 10-50 wt.% of a reactive coupling agent.
In a further aspect, the invention resides in a gap-filling composition suitable as a moisture sealant adhesive. In yet another aspect, the invention resides in a reinforced moisture sealant adhesive, that is particularly suitable for wood joints having constructional purposes.

Also, the invention relates to the use of silyl-based adhesive compositions for making wood joints, particularly for the purpose of preventing and/or avoiding effects of moisture on these wood joints. In a further aspect, the invention is a method of sealing wood joints by applying a gap-filling moisture sealant composition into a cavity present at an existing joint.

### Detailed Description of the Invention

In one aspect, the invention is based on the novel insight to protect wood joints from moisture influences by applying a moisture sealant composition from the inside of the joint, rather than solely as an external coating. This is indicated above with reference to the composition being applied at the interface of the elements forming a wood joint. Where these elements are brought into contact, this refers to any type of contact normally sufficient to form a joint. I.e., this includes indirect contact via fastening means, with or without spacers. Preferably the space between the elements is not more than 2 mm. The invention provides the advantage of being able to connect the elements even so spaced apart, whilst achieving a durable, flexible and moisture tight connection.

For an optimal moisture sealant effect on the joint, it will be apparent that it is preferred if the elements are brought into a direct contact, which means that, but for the presence of the moisture sealant composition, the contact surfaces of the elements form a contact interface. According to the invention, this contact interface will comprise a moisture sealant composition. Preferably, the entire contact surface of either element is covered with said composition.

The moisture sealant composition can be applied to wood joints of a variety of types. It is preferred if the moisture sealant composition is also an adhesive, as in many wood constructions the strength of the joint is contributed to, or even determined, by an adhesive rather than a mechanical bond.

For optimal benefit as a moisture sealant composition to be applied in accordance with the invention, the composition should have gap-filling properties (which e.g. regular polyvinyl acetate based wood adhesives do not) and it should, upon curing, form a dense structure rather than a foam structure (which e.g. regular moisture-curable polyisocyanates do not).

The term "gap-filling" is not used here to indicate that the composition necessarily flows into each and every gap, hole, crack or other opening in the wood structure. It generally indicates properties of viscosity and/or surface tension which allow the composition to be attracted to such gaps rather than repelled. Preferably, these properties are such that the composition will enter, and preferably fill, a substantial portion of available gaps. This will be generally satisfied with a composition having a viscosity of from 1000 to 1000000 mPa.s, preferably between 5000 and 100000 mPa.s., measured at room temperature using a rotational viscosity meter for example Brookfield at a speed of 10 rpm at room temperature. For application (e.g. by injection) in existing constructions, the viscosity is preferably below 10000 mPa.s. For application upon creating joints, the viscosity preferably is of from 10000 to 100000.

For proper gap-filling, the shrinkage upon cure should generally be less than 15% (by volume), preferably less than 10% by volume and more preferably less than 5% by volume. Gap-filling generally refers to a possibility to fill gaps with a width up to 10 mm, preferably up to 5 mm.

The term "silyl composition" most generally refers to monomeric, oligomeric, and polymeric materials having reactive silicon-based functionalities. Preferred moisture sealant compositions used in the present invention are based on silyl polymers or prepolymers that are capable of cross linking in the presence of moisture. This refers to compositions comprising at least a polymer with silyl end-groups capable of cross-linking in the presence of moisture from the air or from the substrate and preferably a reactive coupling mechanism or agent.

The composition is preferably based on one component but may comprises several components that are most preferably mixed prior to application. The composition may be partially cured during mixing. Such partial curing particularly results in the case of a composition comprising a cross-linkable polymer comprising a polyether which is silyl-end capped and a cross-linking catalyst together with reactive coupling agents for the polymer. In another possible embodiment of a two component composition, a first component, preferably containing all or part of the reactive coupling agent, is to be applied on the substrate first, followed by application of second component containing the other components of the composition. This embodiment of the composition can be advantageous if the reactive coupling agent interferes with the curing of the silyl composition.

On the basis of the preferred silyl compositions, the formulation comprises one or more of silyl terminated or silane-modified polymers (A) including all prepolymers which at the chain-ends - or laterally - carry silyl groups having at least one and preferentially more hydrolysable bonds.

Preferably the compositions further comprises one or more reactive coupling agents (B), and optionally one or more a moisture scavengers (C), one or more catalysts (D), treated or untreated functional fillers and or pigments or dyes (E) and additives such as solvents (F), plasticizing agents (G) stabilizers and/or UV absorbers (H), rheology modifiers (I), biocides (J), and/or waxes (K). The formulation may also comprise other polymers such polyesters, cyanoacrylics, phenolics, polyaminoresins, butadiene rubbers, polyacetonitriles, silicones, polychloroprene rubbers, natural rubbers, polysulfides, and butyl rubbers. It is preferred if such other polymers are inert with respect to curing under the influence of moisture.

The moisture cross-linkable polymer or prepolymer (component A), is a polymer having silicon-containing chemical groups capable of hydrolysing in the presence of moisture under formation of silanol groups followed by a condensation step to form a network of siloxane bonds whilst releasing an alkanol (generally methanol or ethanol).

The present invention preferably relates to the use of a composition containing a blend of organic oxyalkylene polymers having at least one silicon-containing functional group capable of cross-linking by formation of at least one siloxane bond and preferentially comprising one or more other reactive groups. The silane groups present can be an α-silane or a γ-silane. Commercially available examples of such polymers are silyl / MS polymers comprising a reactive polymer with polypropyleneoxide main chain and dimethoxysilyl end-groups. Its molecular weight is directly related to the amount of polypropyleneoxide units. The polymer may be modified such as acrylic modified silyl-terminated polyethers. Besides dimetoxysilyls, also trimethoxy or tri- or diethoxysilyl terminated polyether can be used. These products are available from Kaneka in different forms like linear ones as S203H, S303H, SAX350 or SAX 725 or branched such as SAX 400, acrylic modified such as MAX 602 or SAT010 (low molecular weight to reduce viscosity).

Not only modified silane polymers (MS), but also silane terminated polymers (STP) can be used. These polymers are formed by reaction of for instance a polyether polymer with isocyanate termination with aminosilanes or a polyether polymer with amino termination and/or hydroxyl termination with isocyanate-terminated silanes. Reactions of the reactive groups with other materials in the composition is also possible to create other cross-links. Silane-terminated polymers (STP) or silane-modified polymers (MS) can be all pre-polymers which at the chain ends - or laterally - carry silyl groups having at least one hydrolysable bond but which in the polymer framework, do not display the siloxane bond (SiR2O)n that is typical of silicones. Commercially available polymers of these class are trimethoxysilyl propyl carbamate-terminated polyether such as Geniosil STP-E35, Geniosil STP E10 or Geniosil STP E30 dimethoxy(methyl)silylmethylcarbamate-terminated polyether (all Wacker Silicones) and Polymer ST 61 or ST 67 from Hanse-chemie.

It can generally be assumed that irrespective of its chemical structure, any silane-modified polymer displays the properties of a hybrid: curing takes place in the same way as for silicones and the other properties are influenced by the various basic polymer frameworks that are possible between the silyl groups. Silane-terminated or silane-modified polymers can be classed in terms of their structure between polyurethanes and silicones.

There are also other methods of obtaining silicone-modified polymers, for example the reaction of isocyanate-terminated prepolymers with correspondingly reactive aminosilanes or mercaptosilanes to form the desired compounds. The polymer backbone can contain all conceivable, reasonable structural elements such as ether, ester, thioether or disulfide bridges. The opposite case, wherein an amino, sulphide or hydroxyl terminated prepolymer can be reacted with an isocyanate silane, is likewise conceivable. The addition of terminal mercapto groups (either in the prepolymer or in the silane) to carbon-carbon double bonds offers another technically interesting route.

Component A is used in a ratio of 5-100 % by weight,preferably 65-80 wt.%, and most preferably 68-75 wt.% and may comprise of a blend of these polymers which are linear and/or branched and have high or low viscosity or reduce viscosity of the polymer blend. The polymer may be a linear polymer, comprising a linear polypropyleneoxide, comprising of a linear polypropyleneoxide of various chain lengths or mixtures of both or comprises a branched main chain or mixtures of both linear and branched main chains. The polymer may be blended with one or more other polymers having another molecular weight and/or other reactive groups. These polymers must have at least one silicon containing functional group capable of cross-linking by formation of at least one siloxane bond to be cross-linked in the polymer matrix.

In a particularly preferred embodiment, the composition comprises a reactive coupling agents (sometimes referred to as an adhesion promoter). Reactive coupling agents (component B) are used to enhance the cross-linking of the polymer or polymers and to enhance adherence to the substrate or fillers by a chemical reaction. Reactive coupling agents can be used for both purposes if they show reactivity to both the polymer and the substrate. In case of some reactive coupling agents, they act as a water scavenger too due to its reactivity with hydroxyl groups. The composition comprises one or more reactive coupling agents for instance consisting of a combination of a silane group (enhancing a reaction to for instance a modified silane polymer) and comprising a group with high reactivity towards hydroxyl and or water containing groups in wood. For instance materials such as 3-(triethoxysilyl)propyl succinic anhydride, 3-isocyanatopropyltrimethoxysilane or (isocayanatomethyl)methyldimethoxysilane can be suitable. Other reactive coupling agents are vinylalkoxysilanes such as vinyldimethoxymethylsilane, vinyltriethoxysilane or vinyltriacetoxysilane, aminoalkylalkoxysilanes such as N-(2-aminoethyl)3-aminopropyltrimethoxysilaan or 3-aminopropyltriethoxysilane or glycidoxyalkylalkoxysilanes such as 3-glycidyloxypropyltrimethoxysilane. Other options are the use of oligomeric amines such as Dynasilan 1146 (tradename Degussa).

Silane reactive coupling agents consist of general formula Y-R'-SiMeₙ-OR₃₋ₙ n=0,1 in which Y is an (organic) reactive group such as epoxide, methacrylate, mercaptan (SH), polysulfide (Sₓ) etc., primary amine, alkyl and aryl 2^{nd} amine, alkyl, isocyanate, urea, vinyl, etc. and OR- is a (hydrolysable) group such as Me-O-, Et-O-, i-Pr-O-, MeO-CH₂CH₂-O-. R is generally alkyl, notably lower alkyl such as C₁₋₄ alkyl. R' is generally an inert spacer or a bond, notably alkylene such as linear or branched alkylene having up to 10 carbon atoms, and preferably lower alkylene (C₁₋₆). The silane group may contain more Six units where x is the amount of Si units which may have sidegroups which are reactive (as described above) or not like alkyl groups. Some examples are octyl-triethoxysilane, propyl-triethoxysilane, methyltriethoxysilane, trimethoxy-alkyleneoxide,methyl-trimethoxysilane, tris-(3-(trimethoxysilyl)propyl)isocyanurate,hexadecyldrimethoxysilane, bis(triethoxysilyl)ethane, gamma-mercaptopropyltrimethoxysilane, gamma-mercaptopropyltriethoxysilane, bis-(3-(tirethoxysilyl)propyl)polysulfide, bis-(3-(triethoxysilyl)propyl)disulfide, trialkosy-polysulfide, 3-octanoylthio-1 propyltriethoxysilane , gamma-aminopropyltriethoxysilane, aminoalkylsilicone solutions, gamma-aminopropyltrimethoxysilane, N-(Beta-aminotehyl)-gamma-aminopropyltrimethoxysilane, triamino-organofunctional silane, bis-(gamma-(trimethoxysilyl)propyl)amine, primary or secondary amine-n-trialkoxy (polyazamide), gamma-aminopropylmethyldiethoxysilane, N-(beta-aminoethyl)-gamma-aminopropylmethyldimethoxysilane, N-phenyl-gamma-aminopropyltrimethoxysilane, N-ethyl-gamma-aminoisobutyltrimethoxysilane, 4-amino-3,3-dimethylbutyltrimethoxysilane, 4-amino-3,3-dimethylbutylmethyldimethoxysilane, gamma-ureiopropyltrialkoxysilane, gamma-ureidopropytrimethoxysilane, gamma-isocyanatopropyltriethoxysilane, gamma-isocyanatopropyltrimethoxysilane, gamma-glycidoxypropyltrimethoxysilane, gamma-glycidoxypropyltriethoxysilane, gamma-gycidoxypropylmethyldiethoxysilane, beta-(3,4-epoxycyclohexyl)-ethyltrimethoxysilane, beta-(3,4-epoxycyclohexyl)-ethyltriethoxysilane, vinyltrimethoxysilane, vinltriethoxysilane, vinyltriisopropoxysilane, vinylmethyldimethoxysilane, vinyltris-(2-methoxyethoxy)silane, vinyltrialkoxysilane, gamma-methoacryloxypropyltrimethoxysilane, gamma-methacryloxypropyltriethoxysilane or gamma-methacryloxypropyltriisopropoxysilane.

Another class of possible coupling agents are isocyanate functional polymers of aliphatic or aromatic character with or without backbone such as consists of polyether, polyester or polyurethane backbone or multi-functional isocyanates such as di- of trifunctional isocyanate such as toluene diisocyanate (TDI), diisocyanato diphenyl methane (MDI), hexamethylene diisocyanate (HDI), isophorone diisocyanate (IPDI), diisocyanato dicyclohexyl methane (HMDI), xylene diisocyanate (XDI), trimethyl hexane diisocyanate (THMDI), hydrogenated xylyene diisocyanate (HXDI) of tetramethyl xylyene diisocyanate (TMXDI) or polyisocyanates of these products such as isocyanurate HDI trimers or biuretes or isocyanatoalkoxysilanes to react with present hydroxyl or amine-groups.

Preferred are those coupling agents that are more commonly referred to as adhesion promoters for silyl polymers. Reference can be made in this respect to int.al. organofunctional silanes as disclosed in Wacker GmbH's sales brochures on Geniosil®. The adhesion promoter acts through two functional parts. One is a silane (e.g. di- or trimethoxy silane, or ethoxy silane), the other is a functionality having affinity to the substrate as well as with reinforcing fibers and/or fillers as present. Through the silane functionality, the adhesion promoter polymerizes into the siloxane matrix of the silyl polymer. For the other functionality many functional moieties from organic chemistry can be used, particularly amino or epoxy functional groups. Examples include DAMO (N-2aminoethyl-3aminopropyltrimethoxysilane H2N-(CH2)2-NH-(CH2)3-Si(OCH3)3) and GLYMO (gamma-glycidoxypropyltrimethoxysilane). Frequently low-molecular weight amino silane compounds are used, but oligomeric amino silanes can be used as well. These have the advantage of being less prone to toxicity. A suitable example is the oligomeric diamino silane Dynasilan® 1146 ex Degussa.

Several of the adhesion promoters, notably amino silanes, also may act as catalysts for the curing of the silyl polymer, and in that respect the adhesion promoters can also be comprised in the composition as a catalyst (component D).

Component B is used in an amount of 10 - 50 % by weight, preferably 10 - 30 wt.%, and more preferably 15 - 20 wt.%. This unusually high percentage of an adhesion promoter increases strength of the joint and favours the mode of fracture towards failure in adhesive or substrate (cohesive failure) in stead of interfacial failure (adhesive failure) and also contributes to lowering the viscosity of the composition, which is advantageous for the gap-filling properties obtained.

It is preferred for the compositions used in the invention that the moisture content is controlled to prevent immediate cross-linking of the prepolymer resulting in increasing viscosity or even solidification of the composition during storage. Moisture may be imported into the composition in fillers or pigments which may be present. For this reason, the composition of the present invention preferably contains one or more moisture scavengers (component C). Suitable moisture scavengers are alkoxysilanes, such as trialkoxysilanes (especially trimethoxysilanes) and/or amino, mercapto- or epoxy-containing alkoxysilanes. Some examples are gamma-glycidoxypropyltrimethoxysilane, N-beta-(aminoethyl)-gamma-aminopropyltrimethoxysiane, aminopropyltrimethoxysilane, trimethoxyvinylsilane, trimethoxymethylsilane, methyl- or vinyl-tris(2-butanoneoximino)silanes, vinyltrimethoxysilaan, vinyldimethoxymethylsilane, vinyltriethoxysilane, vinyltriacetoxysilane, N-trimethoxysilylmethyl-O-methylcarbamate, N-dimethoxy(methyl)silylmethyl-O-methylcarbamate, Incozol 2, Incozol LV or products such as Zusatzmittel TI (trade name of BAYER). These materials may also act as an adhesion promoter. Component C is used in a ratio of 0 - 10 % by weight, preferably 0,5 - 3 %, most preferably 0,8 - 1,5 %.

A catalyst (component D) can be used in the composition used in the present invention. This may be any catalyst that has activity in relation to the cross-linking of the hydrolysable groups, such as the silyl groups of prepolymers usable in the present invention. Organotin catalysts, for example dibutylbis(2,4-pentanedionato-O,O')tin, dibutyldin-diacetylacetonate or dibutyltindilaurate, dibutyltindiacetae, dibutultindibutylate, tinoctoate or combinations of tin octoate and laurylamine (co-catalyst system) are suitable for this compositon. Alternatively, orthotinates and other organic titanates (titanium chelates) such as titanium acttylacetonate, diisopropoxy-titanium-bis(ethulaceto-acetate), dibutoxy-titanium-bis(ethulaceto-acetate), dibutoxy-titanium-bis-acetylacetonate may be used. Component D is used in a ratio of 0 - 2 % on weight, more specific 0,25 - 1,5 %, most preferentially 0,5 - 1 %.

The composition may comprise one or more pigments, dyes and/or fillers (component E). Pigments are used to colour the composition and giving the composition additional strength. The fillers are used to fill the polymer matrix enhancing its stiffness and adds functionality to the point of break at certain elongation. The pigments and fillers may have influence on viscosity and on the rheology behaviour of the composition during stability, use and curing. Due to the sensitivity of the formulation to water and the aim to have a good shelf-life of the formulation, pigments and fillers should have low water content during production of the formulation. This can be done by choosing pigments and fillers with low affinity for water and/or to pre-dry the pigments and fillers right before use.

In a preferred embodiment, the invention pertains to the use of silyl adhesives as outlined above in such a way that the adhesive itself contributes to the strength of the wood joint construction made therewith. To this end it is the composition preferably comprises reinforcing fillers, preferably in the form of functional fibres of synthetic or natural nature, untreated and/or treated (chemical after treatment with e.g. amino silane) with a length between 10 and 2000 µm and having a diameter between 0.1 and 50 µm preferentially having a length between 100 and 500 µm and a diameter between 3 µm and 10 µm. The composition may further contain other inorganic fillers like for instance silicates, calciumcarbonates, talc, mica, graphite, diatomaceous earth, china clay, kaolin, clay, silicic anhydride, ground quartz, aluminumpowder, zinc powder, zincoxide, zincsulfate, bariumsulfate, wollastonite, magnesium carbonate, aluminumoxide (aluminia),silica (siliciumoxide), calcium oxide, magnesium oxide, asbestos, (inert) microspheres such as 3M Scotchlite K1 or 3M Z-light or Zeeospheres, glass powder or hollow glass beads. These materials can be of natural, chemical and/or precipitated origin, pyrogenated, coated or calcinated.

Also organic filler such as wood flour, walnut shell flour, rice hull flour, pulp, cotton chips, powdered rubber, finely divided thermoplastic or thermosetting resins, hollow polymeric bodies or the like may be used.

The composition may further contain pigments such as titanium dioxide, iron oxide, carbon black, lithopone and all other organic or inorganic pigments commonly used to color coatings or plastics. The use of dyes instead of pigments is another option. Fillers and pigments may have had an aftertreatment to enhance its compatibility with the formulation such as treatment with (reactive) silanes.

Component E is used in a ratio of 0 - 90 % on weight, particularly 5 - 30 %, and more preferably 5 -10%. The fibres, fillers and pigments can be used alone or in any combination.

The composition may comprise (organic) solvents (F) such as white spirit, monopropylacetate or dimethylsulfoxide. The addition of solvents can be advantageous for obtaining an improved gap-filling composition, as solvents lower the viscosity of the composition and enhance surface wetting attained with it. Suitable solvents are terpentines, carbohydrate boiling point fractions, acetates, ketones, formamides, dibasic esters or the like. Care should be taken in the case of reactive solvents, i.e. solvents that contain water or that comprise functional groups capable of reacting with one or more of the active components of the moisture sealant composition, i.e. any of the polymer, catalysts or coupling agents. Such a reaction could lead to untimely curing of the composition. These solvents, viz. those containing hydroxyl or amino groups) are preferably avoided, or at least not present in such an amount as will actually bring about untimely curing. Component F is used in an amount of 0 - 30 % by weight, particularly 0 - 10 % by weight, most preferably 0 - 5 % by weight. The solvents can be used alone or in any combination.

The composition may comprise plasticizing agents (G) to make the composition more flexible during application and in service life. Suitable plasticizers are phthalic esters such as dioctyl phtalate, epoxy-based products such as epoxidized oils, polyesters obtained from dibasic acids and dihydric alcohols, polystyrenes, polybutadienes, polychloroprenes, polyisoprenes, polybutenes, parafines, oxyalkylene polymers and so on. Component G is used in an amount of 0 - 40 % by weight, particularly 0 - 10 % by weight, and most preferably 0 - 5 % by weight. The plasticizing agents can be used alone or in any combination.

The composition may comprise UV stabilizers and/or absorbers (H) such as for instance hindered amine light stabilisers and/or UV-absorbers and/or antioxidants.

The composition may comprise rheology modifiers (I) such as heat activated polyamide waxes, castor oil, bentonites or calcium stearates.

The composition may comprise biocides (J) to prevent wood rot and/or growth of surface moulds and algae.

The composition may comprise waxes (K) such as (combinations of) polyethylenes, polypropylenes or polyamides to enhance application properties and water repellent functionality.

Compositions used in the invention can be produced by a standard dispersion and mixing process were components A to K, to the extent present, are added sequentially. The order of addition can vary but it is preferred to start with (part of) component A. The catalyst (component D), if present, is preferably added at the end of the process to prevent cross linking during the production process. It is preferred that moisture sensitive components are dried before addition. At the end of the production process the composition preferably has a moisture content below 800 ppm.

The formulations described hereinbefore will generally be sensitive to the reaction of moisture and are therefore preferably stored in a moisture-tight packaging or under an inert atmosphere.

The viscosity of the composition may be such that it allows a variety of possible application devices to be used to transfer the composition from the storage container to the substrate. This may include, but is not limited to, conical tubes connected to a cartridge or sausage commonly used for application of sealants, brush, spatula, roller or spraying equipment.

To the extent necessary, the viscosity can be further influenced by the addition of components such as silica's, bentonites, polyamide waxes, and/or by the selection and the amount of solvent.

According to the invention, compositions as described are used in making wood joints. As indicated above, the term "wood joint" indicates a joint between elements comprising a ligno-cellulosic material, such as wood or bamboo. I.e., the different elements to be joined can be made of similar or different materials. Preferably, at least one element part of the joint is made of solid wood, wood-composite or wood based materials like finger-jointed wood, laminated wood (or combinations thereof), fibre-board, particle board, oriented-strand-board, plywood or the like. The wood material used may be of natural nature, preservative treated, thermally or (bio)chemically modified. Also wood-polymer-composites can be used. Instead of wood also particles or fibres of any other ligno-cellulosic material can be used in the composite materials. Other types of materials that can be part of the joint include: glass, (natural) stone, concrete, metal and metal alloys and any kind of thermoplastic or thermosetting polymeric material. All surfaces of materials mentioned may be coated with film-forming or non-film-forming organic or inorganic coatings.

The advantages of the present invention are mostly enjoyed in the case of joints that form structural connections in buildings, such as any connections between single parts used to produce windows, window-frames, doors, door-frames, fences, shutters, balconies, roofs, floors, decks, claddings, sidings, and the like. The industrial production of these building components generally comprise as a first step a machining process to produce single parts followed by a second step where the single elements are jointed to a complete element. The detailed embodiment of the joint includes all possible designs, such as: single or multiple dowels, bridle, hole-and-plug, fingerjoints, mitre, scarf, dovetail, box joint, single or multiple lap, mortise and tenon or tongue and groove. For types of wood joinery, reference is made to pages 9-18 to 9-20 in the aforementioned Charles. B. Vick, Adhesive Bonding of Wood Materials, [Forest Products Laboratory Wood handbook, 1999]. The invention provides the greatest benefits in end-to-edge grain joints as mentioned with reference to Figure 9-10, particularly those joints that not only involve joined interfaces, but also end-grain surfaces, such as miter, dowel, and slip or lock corner.

Because of the gap-filling properties of the preferred compositions of the invention, the joints can be produced with such tolerances that spaces between the surfaces to be connected up to 5 mm width are acceptable whilst maintaining the integrity of the entire joint. The joint may be entirely made out of the materials to be connected but can also contain additional fasteners or connection devices like nails, screws, plates and the like.

The assembly of the joint consist of the application of the composition of the preferably gap filling composition on one or both sides of the inner parts of the joint to be connected following by the actual assembly of the single parts to one element. Additional protection against moisture can be achieved by application of the composition on the other surfaces of the joint, specifically on the end-grains surfaces of the wood. Spreading rate of the composition is between 100 and 5000 g/m², more preferably between 500 and 1500 g/m². Excess amounts of the composition can be removed during assembling the joint. The time between application of the composition and the assembly is between 0 and 120 minutes, more preferable between 0 and 30 minutes. After assembly of the surfaces on which the composition is applied no additional force or pressing is required, but pressure (up to 5 N/mm²) can be applied as desired.

With the preferred compositions used in the invention, curing does not require additional heating and can be carried out at any temperature between 2 and 50 °C. Depending on the self-fixating properties of the joint, some (temporary) fixation or clamping may be used to allow the jointed element to be transported before the composition has cured. The moisture sealant composition can be used during manufacturing of new joinery elements but can also be applied on joints in elements in service. In this case the composition is best injected into the open pores of the joint.

Suitable methods to test the durability, flexibility and moisture tightness of a joint comprise the exposure to moisture by immersion, spraying or condensation and exposure to alternating temperatures ranging from -50 °C to 110 °C with steps of 4-40 h. Heating may be done by convection, conduction or irradiation. This can also be referred to as artificial weathering. A preferred way of testing is described in BRL 2339 "National assessment directive for the KOMO product certificate for adhesives for non-loadbearing applications." Suitable methods for testing the strength of the connection are given by EN 204 "Test methods for wood adhesives for non-structural applications - determination of tensile shear strength of lap joints". Samples to be tested can be heated up to 110 °C, immersed in water at standard atmosphere or in boiling water prior to testing.

The use of a silyl adhesive composition for the purpose of providing moisture protection at a wood joint serves to better adress the aforementioned effects of moisture on wood joints, and at the same time allows to obtain wood joints of desirous strength.

Thus, e.g., when using a composition according to the invention on end-grains of wood or wood composites, whether or not serving as the elements of a joint, a moisture uptake may result of less than 10% of the uptake of an untreated reference sample.

The use of adhesive compositions according to the invention will generally beneficial to the strength of wood joints. This is illustrated, e.g., with reference to joints produced having a tensile shear strength of not less than 3 N/mm² if tested at room temperature and not less than 2 N/mm² if exposed to a temperature up to 90°C for a time period up to 2 hours or if immersed in water with a temperature up to 100 °C for a time period up to 8 hours or if immersed in water with a temperature up to 40 °C for a time period up to 120 hours.

The use of an adhesive composition in accordance with the invention is capable of bringing about an adhesive bond that, if challenged, will show a substantial cohesive failure. I.e., the strength of the bond in these cases is, as desired, determined by the cohesive strength of the adhesive, rather than the adhesive bond itself. In its preferred embodiments, the invention allows to produce wood joints having a tensile shear strength of not less than 3 N/mm² if tested at room temperature, and showing more than 90 % cohesive failure in said composition. Under more severe challenge conditions, the outcome on tensile shear strength will generally be not less than 2 N/mm², and showing more than 90 % cohesive failure. These conditions are e.g. exposure to a temperature of up to 90°C for a time period up to 2 hours or if immersed in water at a temperature up to 100 °C for a time period up to 8 hours or if immersed in water at a temperature up to 40 °C for a time period up to 120 hours. By virtue of the relatively high amount of component B (reactive coupling agent / adhesion promoter) and by the application of fiber reinforement or (silica) filler, the present invention provides tensile shear strengths not previously attainable on the basis of silyl terminated or silane-modified polymers.

Applied to the production of timber constructions or (partly) wooden joinery based on elements as discussed hereinbefore, typically joints can be obtained that remain closed and moisture-tight in artificial weathering cycles for a total testing time of at least 300 hours. The skilled person will appreciate that, in addition to the advantages attainable with the invention, constructions, such as timber constructions, made in accordance with the invention, are preferably provided with a standard (moisture-protective) coating. The resulting construction will generally be capable of having a wood moisture content not exceeding 25 % during service life.

In sum, joints produced according to embodiments of this invention provide two properties crucial to a durable joint in joinery constructions. Firstly strength is in the range of what is typically needed during transport, putting in place and service life of joinery. The cured composition has a combination of elongation, cohesive and adhesive strength such that strains due to differences in dimensional changes of wood can be accommodated without failure. Secondly a moisture barrier is provided to such an extent that moisture content of the wood close to the joint is not significantly higher than of the parts away from the joint. In properly manufactured, coated, glazed and installed wooden joinery this will mean that wood moisture content in service life is not exceeding a value within the range of from 20% to 25 % at maximum. The term "service life" is used here not only to indicate the general notion thereof, which in the industry is generally 20 years, but also any shorter or longer period as a manufacturer may recommend or warrant as a service life, e.g. any period within 5 to 30 years, e,g, any period within 5 to 10 years, and preferably more than 10 years, e,g, 10 to 15 years, or up to to 20 years. The composition is able to prevent capillary uptake of water through end-grains. It impregnates and blocks the end-grains due to its good adherence, high solid content and high viscosity. Due to the fact it is solvent free and has high cross-link density, it has stain blocking properties. The invention/formulation is such formulated that the adhesion of a coating to the composition, also under humid or wet conditions is good. Said coating is a coating based on water- or solvent- borne alkyd or acrylic resin technology.

The invention will be illustrated with reference to the following, nonlimiting Examples.

### Example 1

Compositions 1, 2, 3, 4, 5 and 6 were prepared by mixing the various liquids, and fibrous components in order as listed in Table 1a with a laboratory dissolver at a speed of 3000 rpm until a homogeneous mixture was achieved. Fibrous materials were pre-dried at 120 °C for 24 hours. Air included during the preparation process was removed by vacuum after mixing. Lap shear joints of spruce wood were prepared by spreading the compositions 1 to 6 over an area of about 0.012 m² in a thickness between 1 and 2 mm. After application of the composition both parts were pressed together by hand and allowed to cure without additional pressing. Tensile shear strength was determined at a speed of 50 mm/min. Type of fracture was assessed visually distinguishing adhesive failure cohesive failure and substrate failure. Measurements were carried out in triplicate and average values were calculated and shown in Table 1b.

**Table 1a**

| | | | | | | | |
|---|---|---|---|---|---|---|---|
| | | Formulation (wt.%) of compositions 1-6 | | | | | |
| **Component** | **Function** | **1*** | **2*** | **3** | **4** | **5** | **6** |
| Kaneka SAX 725 | (A) | 96 | 86 | 83 | 73 | 53 | 70 |
| Wacker Geniosil | (A) | | | | | 20 | |
| STP E30 | | | | | | | |
| Rhodia Tolonate | (B) | | | | | | 18 |
| HDT-LV2 | | | | | | | |
| Lapinus Rockforce | (E) | | 10 | | 10 | 10 | 10 |
| ms 610 | | | | | | | |
| Degussa VTMO | (C) | 1 | 1 | 1 | 1 | 1 | 1 |
| Degussa DAMO | (B) | 2 | 2 | 15 | 15 | 15 | |
| Nitto Kasei | (D) | 1 | 1 | 1 | 1 | 1 | 1 |
| Neostann U220 H | | | | | | | |

| | | | | | | | |
|---|---|---|---|---|---|---|---|
| * not according to the invention | | | | | | | |

**Table 1b**

| | Composition | | | | | |
|---|---|---|---|---|---|---|
| | 1 | 2 | 3 | 4 | 5 | 6 |
| Tensile shear strength N/mm² | 1.04 | 0,86 | 2,17 | 3,39 | 2.58 | 2.24 |
| Fracture type | mixed adhesive /cohesive | adhesive | adhesive | mixed cohesive / substrate | cohesive | cohesive |

### Example 2

Composition 4 of Example 1 was applied on the wood species: beech, meranti, merbau, sapupira, jatoba and oregon pine according to the method EN 204. After 2 weeks curing, tensile shear strength was measured with and without immersion in water at room temperature for 96 hours. Additional samples on beech wood were tested at a temperature of 80 °C. Results are shown in Table 2.

**Table 2**

| Tensile strength | beech | meranti | merbau | sapupira | jatoba | oregon pine |
|---|---|---|---|---|---|---|
| N/mm² | | | | | | |
| Dry | 4,92 | 4,65 | 3,47 | 3,84 | 6,54 | 5,14 |
| 96 h water | 2,43 | 2,83 | 3,15 | 2,31 | 4,16 | 2,73 |
| 80 °C | 3,17 | - | - | - | - | - |

## Claims

1. A method of joining two or more elements made from wood, the method comprising bringing into contact at least one surface portion of either element so as to define a contact interface between the elements, wherein a moisture sealant silyl composition, capable of crosslinking in the presence of moisture, is applied at the interface, wherein the composition comprises 10-50 wt.% of a reactive coupling agent.

2. A method according to claim 1, wherein the composition comprises 10-30 wt.% of a reactive coupling agent.

3. A method according to claim 1 or 2, wherein the moisture sealant composition has gap-filling properties.

4. A method according to claim 3, wherein the composition has a viscosity, measured at room temperature, of from 5000 to 100000 mPas and a shrinkage upon cure of less than 15% (by volume).

5. A method according to any one of the claims 1 to 4, wherein the moisture-sealant composition is an adhesive.

6. A method according to any one of the preceding claims, wherein the moisture-sealant composition is a silyl terminated or silane-modified polymer.

7. A method according to any one of the preceding claims, wherein the reactive coupling agent is a silane coupling agent, preferably in an amount of 15-20 wt.%.

8. A method according to any one of the preceding claims, wherein the moisture sealant composition comprises reinforcing fillers.

9. A method according to claim 8, wherein the reinforcing fillers are present in an amount of 5-30 wet.%.

10. A method according to any one of the preceding claims, wherein the contact surfaces of the elements are determined by a wood joinery form, preferably selected from the group consisting of end-to-edge grain joints, such as miter, dowel, and slip or lock corner.

11. A method according to any one of the preceding claims, wherein the moisture-sealant composition is used on end-grains of wood.

12. A method according to any one of the preceding claims, wherein the wood is a thermally or (bio)chemically modified wood material.

13. The use of a composition comprising a silyl terminated or silane modified polymer or prepolymer and a reactive coupling agent, preferably an adhesion promoter, wherein the coupling agent is present in an amount of from 5 to 50 wt.%, preferably of from 10 to 30 wt.%, and most preferably of from 15 to 20 wt.% for the purpose of providing moisture protection around a wood joint.

14. A use according to claim 13, wherein the wood moisture content in the joined elements during service life does not exceed a value within the range of from 20% to 25% at maximum, wherein service life is a period recommended or guaranteed with the moisture sealant composition, which period is within 5 to 30 years, and preferably within 10 to 20 years.

15. A use according to claim 14, for the purpose of making a wood joint having a tensile shear strength of not less than 3 N/mm² if tested at room temperature and not less than 2 N/mm² if exposed to a temperature up to 90°C for a time period up to 2 hours or if immersed in water with a temperature up to 100 °C for a time period up to 8 hours or if immersed in water with a temperature up to 40 °C for a time period up to 120 hours.

16. A use according to claim 15, wherein the composition further comprises reinforcing fillers.

## Patentansprüche

1. Verfahren zum Verbinden von zwei oder mehr aus Holz bestehenden Elementen, wobei das Verfahren das Miteinander-In-Kontakt-Bringen wenigstens eines Oberflächenteils von jedem Element umfasst, so dass eine Kontaktfläche zwischen den Elementen definiert ist, wobei eine gegenüber Feuchtigkeit abdichtende Silylzusammensetzung, die zur Vernetzung in Gegenwart von Feuchtigkeit befähigt ist, auf die Kontaktfläche aufgetragen wird, wobei die Zusammensetzung 10 bis 50 Gew.-% eines reaktiven Kopplungsmittels umfasst.

2. Verfahren gemäß Anspruch 1, wobei die Zusammensetzung 10 bis 30 Gew.-% eines reaktiven Kopplungsmittels umfasst.

3. Verfahren gemäß Anspruch 1 oder 2, wobei die gegenüber Feuchtigkeit abdichtende Zusammensetzung fugenfüllende Eigenschaften hat.

4. Verfahren gemäß Anspruch 3, wobei die Zusammensetzung eine bei Raumtemperatur gemessene Viskosität von 5000 bis 100 000 mPa·s und eine Schrumpfung nach der Härtung von weniger als 15 Vol.-% aufweist.

5. Verfahren gemäß einem der Ansprüche 1 bis 4, wobei die gegenüber Feuchtigkeit abdichtende Zusammensetzung ein Kleber ist.

6. Verfahren gemäß einem der vorstehenden Ansprüche, wobei die gegenüber Feuchtigkeit abdichtende Zusammensetzung ein silylterminiertes oder silanmodifiziertes Polymer ist.

7. Verfahren gemäß einem der vorstehenden Ansprüche, wobei das reaktive Kopplungsmittel ein Silan-Kopplungsmittel ist, vorzugsweise in einer Menge von 15 bis 20 Gew.-%.

8. Verfahren gemäß einem der vorstehenden Ansprüche, wobei die gegenüber Feuchtigkeit abdichtende Zusammensetzung verstärkende Füllstoffe umfasst.

9. Verfahren gemäß Anspruch 8, wobei die verstärkenden Füllstoffe in einer Menge von 5 bis 30 Gew.-% vorhanden sind.

10. Verfahren gemäß einem der vorstehenden Ansprüche, wobei die Kontaktflächen der Elemente durch eine Holzverbindungsform bestimmt sind, die vorzugsweise aus der Gruppe ausgewählt ist, die aus Hirnholz-Längsholz-Verbindungen, wie Gehrungsverbindung, Dübelverbindung und Fingerzinkung, besteht.

11. Verfahren gemäß einem der vorstehenden Ansprüche, wobei die gegenüber Feuchtigkeit abdichtende Zusammensetzung auf Hirnholz verwendet wird.

12. Verfahren gemäß einem der vorstehenden Ansprüche, wobei das Holz ein thermisch oder (bio)chemisch modifiziertes Holzmaterial ist.

13. Verwendung einer Zusammensetzung, die ein silylterminiertes oder silanmodifiziertes Polymer oder Prepolymer und ein reaktives Kopplungsmittel, vorzugsweise einen Haftvermittler, umfasst, wobei das Kopplungsmittel in einer Menge von 5 bis 50 Gew.-%, vorzugsweise 10 bis 30 Gew.-% und am meisten bevorzugt 15 bis 20 Gew.-% vorhanden ist, zum Schutz einer Holzverbindung vor Feuchtigkeit.

14. Verwendung gemäß Anspruch 13, wobei der Feuchtigkeitsgehalt des Holzes in den miteinander verbundenen Elementen während ihrer Lebensdauer im Maximum einen Wert im Bereich von 20 bis 25% nicht überschreitet, wobei die Lebensdauer eine Zeit ist, die mit der gegenüber Feuchtigkeit abdichtenden Zusammensetzung empfohlen oder garantiert wird, wobei diese Zeit 5 bis 30 Jahre und vorzugsweise 10 bis 20 Jahre beträgt.

15. Verwendung gemäß Anspruch 14 zur Herstellung einer Holzverbindung mit einer Zugscherfestigkeit von nicht weniger als 3 N/mm², wenn sie bei Raumtemperatur getestet wird, und nicht weniger als 2 N/mm², wenn sie bis zu 2 Stunden lang einer Temperatur von bis zu 90 °C ausgesetzt wird oder bis zu 8 Stunden lang in Wasser mit einer Temperatur von bis zu 100 °C eingetaucht wird oder bis zu 120 Stunden lang in Wasser mit einer Temperatur von bis zu 40 °C eingetaucht wird.

16. Verwendung gemäß Anspruch 15, wobei die Zusammensetzung weiterhin verstärkende Füllstoffe umfasst.

## Revendications

1. Procédé d'assemblage de deux éléments en bois ou plus, le procédé comprenant la mise en contact d'au moins une partie de surface de l'un et l'autre élément de façon à définir une interface de contact entre les éléments, où une composition allylique de scellement contre l'humidité, capable de réticulation en présence d'humidité, est appliquée à l'interface, où la composition comprend 10 à 50 % en poids d'un agent de couplage réactif.

2. Procédé selon la revendication 1, où la composition comprend 10 à 30 % en poids d'un agent de couplage réactif.

3. Procédé selon la revendication 1 ou 2, où la composition de scellement contre l'humidité a des propriétés de remplissage de joints.

4. Procédé selon la revendication 3, où la composition a une viscosité, mesurée à température ambiante, de 5 000 à 100 000 mPa.s et un retrait à la cuisson de moins de 15 % (en volume).

5. Procédé selon l'une quelconque des revendications 1 à 4, où la composition de scellement contre l'humidité est une colle.

6. Procédé selon l'une quelconque des revendications précédentes, où la composition de scellement contre l'humidité est un polymère à terminaison silyle ou modifié par le silane.

7. Procédé selon l'une quelconque des revendications précédentes, où l'agent de couplage réactif est un agent de couplage du silane, de préférence en une quantité de 15 à 20 % en poids.

8. Procédé selon l'une quelconque des revendications précédentes, où la composition de scellement contre l'humidité comprend des charges de renfort.

9. Procédé selon la revendication 8, où les charges de renfort sont présentes en une quantité de 5 à 30 % en poids.

10. Procédé selon l'une quelconque des revendications précédentes, où les surfaces de contact des éléments sont déterminées par une forme de menuiserie en bois, de préférence sélectionnée dans le groupe constitué des assemblages dans le fil bout-à-bord, tels qu'onglet, cheville et joint de glissement ou en queue d'aronde.

11. Procédé selon l'une quelconque des revendications précédentes, où la composition de scellement contre l'humidité est utilisée sur les tailles contre le fil du bois.

12. Procédé selon l'une quelconque des revendications précédentes, où le bois est un bois modifié thermiquement ou (bio)-chimiquement.

13. Utilisation d'une composition comprenant un polymère ou prépolymère à terminaison silyle ou modifié par le silane et un agent de couplage réactif, de préférence un promoteur d'adhérence, où l'agent de couplage est présent en une quantité de 5 à 50 % en poids, de préférence de 10 à 30 % en poids, et de façon particulièrement préférée de 15 à 20 % en poids dans le but de fournir une protection contre l'humidité autour du joint en bois.

14. Utilisation selon la revendication 13, où la teneur en humidité du bois dans les éléments assemblés durant leur vie utile n'excède pas une valeur comprise dans la plage de 20 % à 25 % au maximum, où la durée de vie est une durée recommandée ou garantie par la composition de scellement contre l'humidité, laquelle durée est dans la plage de 5 à 30 ans, et de préférence de 10 à 20 ans.

15. Utilisation selon la revendication 14, dans le but de réaliser un joint en bois ayant une résistance au cisaillement à la traction supérieure ou égale à 3 N/mm² lors de test à la température ambiante et supérieure ou égale à 2 N/mm² lors d'exposition à une température allant jusqu'à 90°C pendant une durée allant jusqu'à 2 h ou d'immersion dans de l'eau à une température allant jusqu'à 100°C pendant une durée allant jusqu'à 8 h ou d'immersion dans de l'eau à une température allant jusqu'à 40°C pendant une durée allant jusqu'à 120 h.

16. Utilisation selon la revendication 15, où la composition comprend en outre des charges de renfort.
